# EUROPEAN PATENT APPLICATION

(11) **EP 1 950 695 A1**
(43) Date of publication of application: **30.07.2008**
(21) Application number: 07001920.3
(22) Date of filing: 29.01.2007
(51) Int. Cl.: G06Q 10/00, G06F 17/30

(54) **Technique for customizing data transmissions**

(71) Applicant: Lufthansa AirPlus Servicekarten GmbH, 63263 Neu-Isenburg (DE)
(72) Inventor: Noller Ralf, 64572 Büttelborn (DE)
(74) Representative: Röthinger, Rainer

(57) **Abstract**

A technique for customizing data transmissions based on recipient-specific formatting rules is described. According to a method aspect of the present invention, a data structure having a plurality of data items is subjected to a formatting step before being transmitted via the computer network to a recipient, and the formatting step is based on a predefined formatting rule. The predefined formatting rule may be a recipient-specific formatting rule obtained by the following steps: receiving a request for an adaptation of a standard formatting rule for a specific recipient; transmitting menu information enabling a specification of adaptation instructions; receiving, in response to the transmitted menu information, adaptation instructions pertaining to the recipient; and generating the recipient-specific formatting rule, for example by adapting the standard formatting rule in accordance with the received adaptation instructions.

## Description

### Field of the Invention

The present invention relates to a technique for customizing in a computer network system data transmissions to a plurality of data recipients. More precisely, the present invention relates to customizing such data transmissions based on recipient-specific formatting rules.

### Background of the Invention

Masses of data are generated and transmitted via computer networks such as intranets or the Internet each day. While conventional transmission mechanisms like letters include data items as plain text on a piece of paper, electronic transmission channels require that the data items are packaged into electronic data structures for being sent to recipient components (or briefly "recipients") within the computer network system. Electronic data structures may for example be sent as attachments to e-mails, or they may be retrieved by their recipients via the file transfer protocol (FTP), or any other mechanism, from a central server. There exists a plethora of further transmission channels, including the X.400 protocol well known in the art.

In order to utilize (e.g., display, process or print) the content of an electronic data structure by a recipient, the format of the data structure used to convey the data items has to be known to and supported by the recipient. For this reason, various data structure formats have been standardized. As examples for such standards, the extensible markup language (XML) format or the comma separated value (CSV) format can be mentioned. Today, both formats are widely used for packaging data items into data structures for transmission via computer networks.

In many cases, the format of a particular data structure is determined by the needs and capabilities of its recipient. The needs and capabilities of an individual recipient may already be considered upon generating a data structure for this recipient. In one example, the recipient may notify the network component generating the data structure that the data structure has to comply with a particular one of the standard formats, such as CSV.

It has, however, turned out that the conventional standard formats are in many cases not fully compatible with recipient infrastructures and often necessitate recipient-specific modifications. Moreover, even if a standard format is supported, a recipient may still wish an adaptation of the data structure that is to be transmitted, and in particular its content, according to specific requirements (that could additionally be varying from time to time).

Consequently, there is a need for a technique that permits customizing data transmissions in a computer network system in accordance with the requirements and capabilities of individual recipients.

### Summary of the Invention

According to a first aspect of the present invention, this need is satisfied by a method of customizing data transmissions to a plurality of recipients in a computer network system, wherein a data structure having a plurality of data items is subjected to a formatting step before being transmitted via a computer network to a recipient, and wherein the formatting step is based on a predefined formatting rule. The method comprises the steps of receiving a request for an adaptation of a standard formatting rule for a specific recipient; transmitting menu information enabling a specification of adaptation instructions; receiving, in response to the transmitted menu information, one or more adaptation instructions pertaining to the recipient; and generating a recipient-specific formatting rule in accordance with the received adaptation instructions.

The customizing steps, which may be performed via a Webportal, result in a recipient-specific formatting rule in accordance with the requirements and capabilities of the recipient. The adaptation instructions that lead to the recipient-specific formatting rule may be specified by the recipient itself or by any network component acting on behalf of the recipient. The recipient-specific formatting rule may be generated by adapting the standard formatting rule in accordance with the adaptation instructions. Alternatively, the recipient-specific formatting rule may be generated from the scratch based on the adaptation instructions specified by the recipient. In one implementation, the recipient specific formatting rule includes recipient-specific parameter settings in relation to parameters defined in the standard formatting rule.

The recipient specific parameter settings may be indicated in the adaptation instructions.

In order to allow for a testing of a newly generated recipient-specific formatting rule, one or more dummy data structures may be subjected to this formatting rule. In one implementation of this approach, the method further comprises the steps of providing a dummy data structure having a plurality of dummy data items; formatting the dummy data structure in accordance with the recipient-specific formatting rule to generate a formatted dummy data structure; and transmitting the formatted dummy data structure. The formatted dummy data structure may be transmitted to the particular network component from which the adaptation instructions have been received.

Transmission of the formatted dummy data structure may take place shortly after the generation of the recipient-specific formatting rule to enable an immediate check and, if required, an iterative adaptation of the newly generated recipient-specific formatting rule. According to a first variant, the dummy data structure is formatted and transmitted in response to receipt of an explicit transmission request. According to another variant, the dummy data structure is formatted and transmitted as a default service.

The adaptation instructions may directly be specified in a menu generated on a receiving side based on the transmitted menu information. A menu generated based on the menu information may present a plurality of predefined options for specifying the adaptation instructions.

The individual adaptation instructions may relate to various aspects of the standard formatting rule. According to a first option, in which the data structure is representable in the form of a data table having a plurality of columns, the adaptation instructions specify column-related operations. Such column-related operations include an addition or deletion of one or more columns, a change of column order, or a combination of the content of two or more columns into to a single column. According to a second option, the adaptation instructions relate to a separation of the individual data items. In one example, the adaptation instructions specify how the individual data items are to be separated within the data structure. In a further example, the adaptation instructions relate to the separation of data sub-items within a single data item.

Once a recipient-specific formatting rule has been generated, this formatting rule may be applied in context with individual data transmissions to a particular recipient. In this regard, the method may further comprise the steps of receiving a data structure having a plurality of data items, the data structure being associated with a specific recipient; applying the recipient-specific formatting rule that has been generated for the recipient to the data structure to generate a formatted data structure; and transmitting the formatted data structure via the computer network to the recipient.

The present customizing method scales easily and can thus be used to administer recipient-specific formatting rules for a large number of individual recipients. The method may thus further comprise the steps of providing a plurality of recipient-specific formatting rules, each recipient-specific formatting rule being associated with a unique identifier; determining an identifier associated with the received data structure; and identifying the applicable recipient-specific formatting rule based on the identifier associated with the data structure.

In one implementation, the standard formatting rule (e.g. standard parameter settings of the standard formatting rule) is applied if no recipient-specific formatting rule has been defined for an individual recipient. The method may thus further comprise the steps of receiving a data structure having a plurality of data items, the data structure being associated with a specific recipient; determining if a recipient-specific formatting rule (e.g. recipient-specific parameter settings of the standard formatting rule) is available for the recipient; applying the standard formatting rule to the data structure if it is determined that no recipient-specific formatting rule is available; and transmitting the formatted data structure via the computer network to the recipient.

Application of a predefined formatting rule to a data structure and transmission of the formatted data structure to its recipient may be performed by an electronic data interchange component communicating with a data provisioning component. The data provisioning component may generate the data structure that is to be formatted and forward the generated data structure to the electronic data interchange component for formatting. To this end, the data provisioning component may perform the steps of identifying a plurality of data items associated with a specific recipient; generating a data structure including the plurality of identified data items; and transmitting the generated data structure to the electronic data interchange component.

The individual data items packaged into the data structure may have been generated in context with individual transactions that may satisfy the ACID transaction paradigm. In one variation, each individual transaction is associated with a recipient-specific identifier, and all data items associated with a particular recipient-specific identifier are packaged into a single data structure.

The standard formatting rule may be based on a format selected from the group consisting of CSV, XML, the Microsoft Excel format (XLS), the electronic data interchange for administration, commerce and transport (EDIFACT) format, the SAP-compliant transaction format ATX, and a proprietary format. Likewise, the data structure may be provided by the provisioning component in a provisioning format that is selected from the group consisting of CSV, XLS, EDIFACT, XML, ATX, and a proprietary format. In certain situations, the format underlying the formatting rule applied by the electronic data interchange component may be different from the provisioning format. For example, the provisioning format may be XML, and the format applied by the electronic data interchange component may be CSV or a recipient-specific adaptation thereof. In such a case, the formatting rule may include transposing the provisioning format into one of a standard format and a recipient-specific format derived from the standard format.

According to another aspect of the present invention, a method of customizing data transmissions to a plurality of recipients in a computer network system is provided, wherein a data structure having a plurality of data items is subjected to a formatting step before being transmitted via a computer network to a recipient, and wherein the formatting step is based on a predefined formatting rule. The method comprises the steps of generating and transmitting a request for an adaptation of a standard formatting rule for a specific recipient; receiving menu information enabling a specification of adaptation instructions; and generating, in response to the received menu information, and transmitting one or more adaptation instructions pertaining to the recipient, wherein the adaptation instructions define a recipient-specific formatting rule. At least some of these steps may be performed via a Web-portal.

The present invention can be practised in the form of software, in the form of one or more hardware components, or as a combined software/hardware solution. According to a software aspect, a computer program product is provided. The computer program product comprises program code portions for performing the method steps when the computer program product is executed on one or more computing devices. The computer program product may be stored on a computer-readable recording medium such as a CD-ROM, a DVD, a hard-disc, and the like.

As for a hardware aspect, a device for customizing data transmissions to a plurality of recipients in a computer network system is provided, wherein a data structure having a plurality of data items is subjected to a formatting step before being transmitted via a computer network to a recipient, and wherein the formatting step is based on a predefined formatting rule. The device comprises a first interface adapted to receive a request for an adaptation of a standard formatting rule for a specific recipient; a second interface adapted to transmit menu information enabling a specification of adaptation instructions; the first interface additionally being adapted to receive, in response to the transmitted menu information, adaptation instructions pertaining to the recipient; and a processor adapted to generate a recipient-specific formatting rule (e.g. by adapting the standard formatting rule) in accordance with the received adaptation instructions. The first interface and the second interface may be located on a single hardware component or may be distributed among two hardware components logically (i.e. from the view of the recipient) forming one device.

According to a further hardware aspect, a device for customizing data transmissions to a plurality of recipients in a computer network system is provided, wherein a data structure having a plurality of data items is subjected to a formatting step before being transmitted via a computer network to a recipient, and wherein the formatting step is based on a predefined formatting rule. The device comprises a processor adapted to generate a request for an adaptation of a standard formatting rule for a specific recipient; a first interface adapted to transmit the generated request; a second interface adapted to receive menu information enabling a specification of adaptation instructions; wherein the processor is further adapted to generate, in response to the received menu information, one or more adaptation instructions pertaining to the recipient, the adaptation instructions defining a recipient-specific formatting rule (e.g. an adaptation of the standard formatting rule); and wherein the second interface is further adapted to transmit the generated adaptation instructions.

### Brief Description of the Drawings

In the following, the invention will be described in more detail with reference to exemplary embodiments illustrated in the drawings, wherein:
- Fig. 1: is a schematic diagram illustrating a computer network system including various device embodiments of the present invention;
- Fig. 2: is a schematic flow chart illustrating a first method embodiment of the present invention;
- Fig. 3: is a schematic flow chart illustrating a second method embodiment of the present invention;
- Fig. 4: schematically shows a visual representation of a data structure for use in the embodiments of the present invention;
- Fig. 5: shows a first graphical user interface for use in embodiments of the present invention; and
- Fig. 6: shows a second graphical user interface for use in embodiments of the present invention.

### Detailed Description of Preferred Embodiments

In the following description, for purposes of explanation and not limitation, specific details are set forth, such as particular sequences of method steps, specific messaging sequences, certain communication protocols, and specific data structure formats, in order to provide a thorough understanding of the present invention. It will be apparent to one skilled in the art that the present invention can be practised in other embodiments that depart from these specific details.

Moreover, those skilled in the art will appreciate that the functions explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

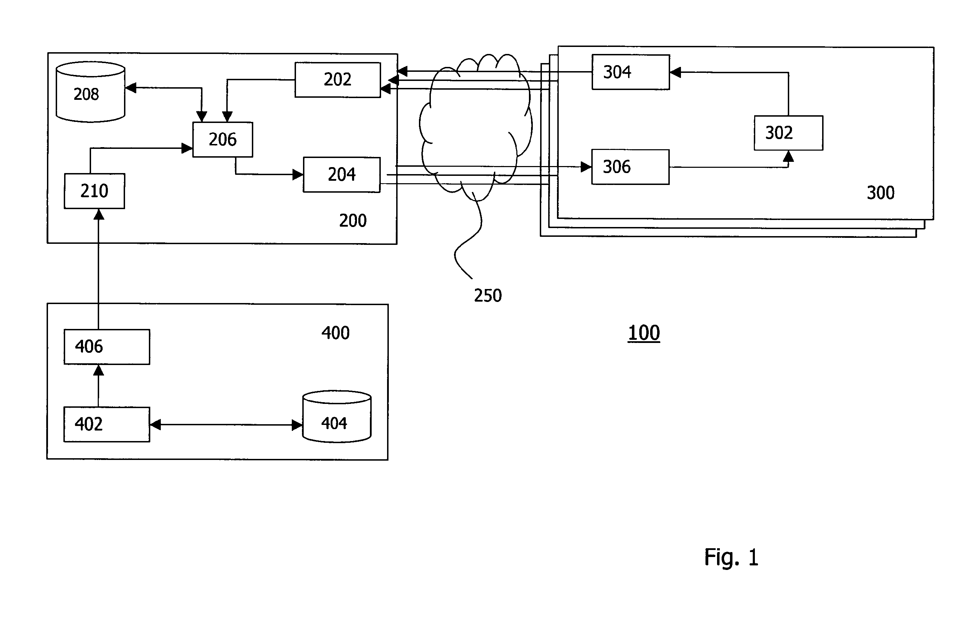

Fig. 1 shows a network system 100 including several network components 200, 300, 400 configured to communicate with each other. Network component 200 constitutes an embodiment of an electronic data interchange (EDI) component, and network component 300 constitutes an embodiment of a recipient component, or simply recipient. The computer network system 100 will typically include a plurality of recipients 300 adapted to communicate with the central EDI component 200 as illustrated in Fig. 1. EDI component 200 and recipients 300 communicate with each other via a computer network 250, such as the Internet or any other public or non-public network. In this context, one or more communication protocols such as the hypertext transfer protocol (HTTP), FTP, or any e-mail protocol may be used.

The third network component 400 constitutes a data provisioning component coupled to the EDI component 200. The EDI component 200 and the data provisioning component 400 are typically co-located and communicate with each other via an intranet or via a direct communication link.

As shown in Fig. 1, the EDI component 200 comprises a first interface 202 as well as a second interface 204 for communicating with the recipient 300. Although shown in Fig. 1 as separate entities, the two interfaces 202 and 204 may be physically combined into a single interface.

The first interface 202 is adapted to receive a request for an adaptation of a standard formatting rule for a specific recipient. The request may either be received, as shown in Fig. 1, directly from the recipient 300 or (not shown) from any other network component acting on behalf of the recipient 300. The second interface 204 is adapted to respond to the request by transmitting menu information enabling a specification of adaptation instructions. Again, the menu information may either be transmitted, as shown in Fig. 1, directly to the recipient 300, or, in the alternative, to any other network component acting on behalf of the recipient 300. The first interface 202 is additionally adapted to receive, in response to the transmitted menu information, adaptation instructions pertaining to the recipient 300. The adaptation instructions may either be received, as shown in Fig. 1, directly from the recipient 300 or from any other network component acting on behalf of the recipient 300.

The EDI component 200 additionally comprises a processor 206 configured to communicate with the two interfaces 202, 204 and adapted to generate a recipient-specific formatting rule in accordance with the adaptation instructions received via the interface 202. Moreover, a database 208 is provided that serves as storage for the recipient-specific formatting rule (e.g. for the adaptation instructions as received via the interface 202 or for any recipient-specific parameter settings of a standard formatting rule). Additionally, one or more standard formatting rules (e.g. one or more sets of standard formatting instructions or standard settings of the standard formatting rule) and dummy data structures may be stored in the database 208. A third interface 210 of the EDI component 200 is configured for communication with the data provisioning component 400 and will be described in more detail later on.

Turning now to the recipient 300, this network component includes a processor 302 adapted to generate a request for an adaptation of a standard formatting rule. Additionally, a first interface 304 is provided and adapted to transmit the request generated by the processor 302 via the computer network 250 to the EDI component 200 (where it is received by the interface 202). A second interface 306 of the recipient 300 is adapted to receive menu information via the network 250 that enable a specification of adaptation instructions. Although the two interfaces 304, 306 are shown in Fig. 1 as separate entities, they may be physically combined into a single interface.

The processor 302 is further adapted to generate, in response to receipt of menu information via the interface 306, adaptation instructions pertaining to the recipient and enabling generation of a recipient-specific formatting rule in accordance with the adaptation instructions. The second interface 306 is adapted to transmit the adaptation instructions generated by the processor 302 to the EDI component 200.

It should be noted that in the embodiment of Fig. 1, the network component 300 generating the adaptation instructions will be identical to the later recipient of data structures that have been formatted in accordance with the recipient-specific formatting rule generated based on these adaptation instructions. In other embodiments, however, the network component 300 generating the adaptation instructions may be different from the later recipient of data structures that have been formatted in accordance with the recipient-specific formatting rules.

As has already been mentioned above, the network system 100 further comprises the data provisioning component 400. Once a recipient-specific formatting rule has been generated by the EDI component 200 and stored in the database 208, any data structures sent from the data provisioning component 400 to the EDI component 200 and pertaining to a specific recipient will be formatted in accordance with the recipient-specific formatting rule stored for this recipient in the database 208. To this end, the data provisioning component 400 comprises a processor 402 capable of identifying a plurality of data items associated with one specific recipient in a local database 404. The processor 402 is further configured to retrieve the identified data items from the database 404 and to generate a data structure including the plurality of retrieved data items.

The data provisioning component 400 additionally comprises an interface 406 adapted to transmit the data structure generated by the processor 402 to the EDI component 200. There, it is received by the third interface 210 mentioned above and forwarded to the processor 206. The processor 206 is configured to identify a suitable formatting rule (e.g. a set of formatting instructions) in the database 208, to retrieve the identified formatting rule and to apply the retrieved formatting rule to the data structure received via the third interface 210 from the data provisioning component 400. The data structure formatted by the processor 206 will eventually be sent via the interface 204 to the designated recipient 300.

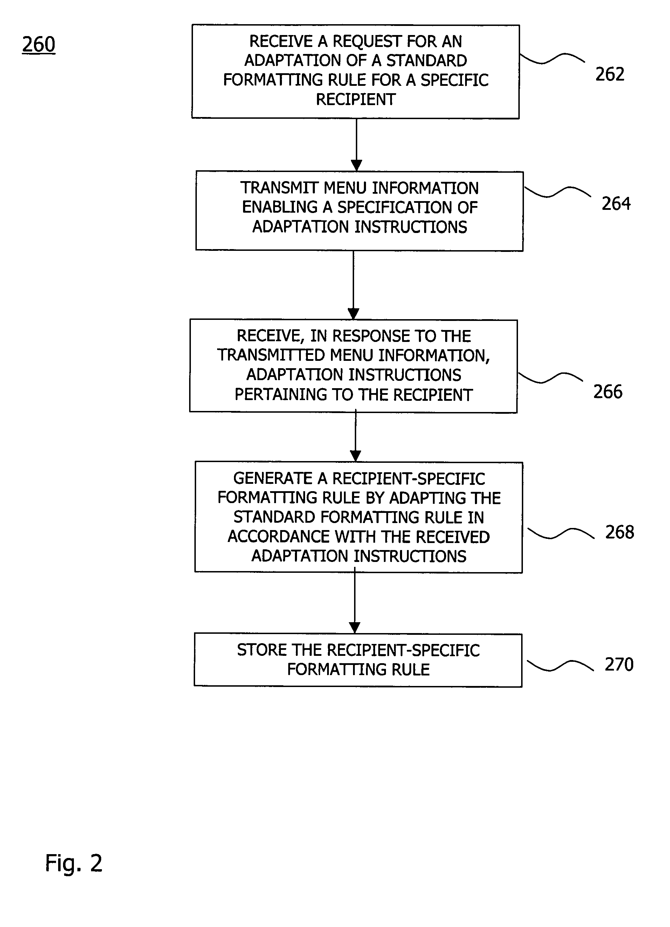

Fig. 2 shows a schematic flow chart 260 of a method embodiment that may be practised by network component having the configuration of the EDI component 200 or any other configuration. The method embodiment aims at generating a recipient-specific formatting rule for customizing data transmissions. Once generated, the recipient-specific formatting rule will be applied to data structures before transmitting the formatted data structures to their recipient.

As shown in Fig. 2, the method starts, in step 262, with receiving a request for an adaptation of a standard formatting rule for a specific recipient. The method proceeds with transmitting menu information enabling a specification of adaptation instructions (step 264). In a next step 266, and in response to the transmitted menu information, adaptation instructions pertaining to the recipient are received. The adaptation instructions may have been selected in or derived from the menu information.

In a further step 268, a recipient-specific formatting rule is generated. Generation of the recipient-specific formatting rule may include adapting parameter settings of the standard formatting rule in accordance with the adaptation instructions received in step 266. In step 270, the recipient-specific formatting rule (e.g. the recipient-specific parameter settings) generated in step 268 is stored for later use. The stored recipient-specific formatting rule may thus be applied at a later point in time for formatting data structures associated with the corresponding recipient before forwarding the formatted data structures to this recipient.

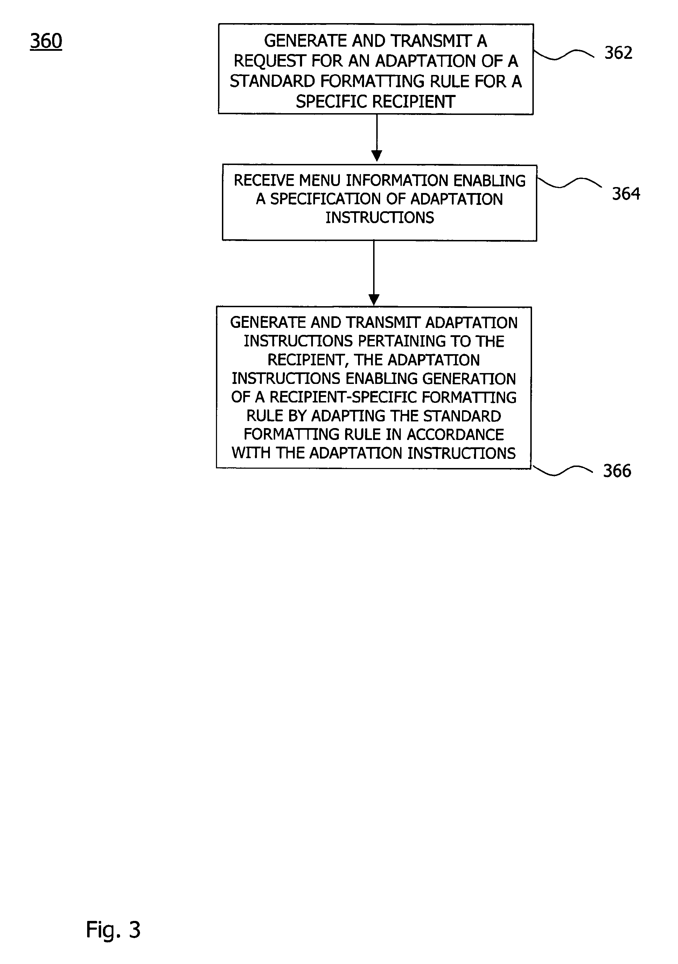

In Fig. 3, a flow chart 360 of another method embodiment is shown. This method embodiment may be practised by a network component having for example the configuration of the recipient 300 shown in Fig. 1 (that, at a later stage, will receive the formatted data structures) or by any network component acting on behalf of the recipient 300.

The method starts, in step 362, with generation and transmission of a request for an adaptation of a standard formatting rule for a specific recipient. In response to this request, menu information enabling a specification of adaptation instructions are received in step 364. In a further step 366, adaptation instructions pertaining to the recipient are generated and transmitted. The adaptation instructions generated in step 366 enable generation of a recipient-specific formatting rule, for example by adapting the standard formatting rule in accordance with the adaptation instructions.

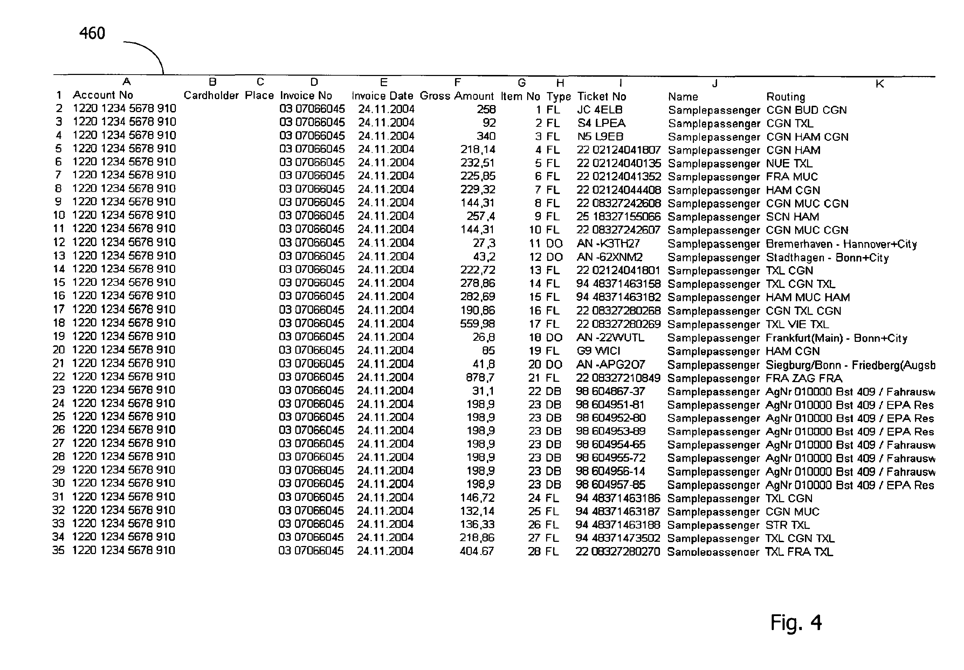

In the following, an exemplary data structure, the content of the menu information, and the generation of adaptation instructions will be described in more detail with reference to Figs. 4 to 6.

Fig. 4 shows a table 460 that constitutes a visual representation of an exemplary data structure such as a CSV file or an XML file. The table 460 includes a plurality of data items filled into individual table fields. In a vertical direction of the table 460, the data fields are grouped into individual table columns (A, B, C, and so on). In a horizontal direction, the data items are grouped into individual table lines (1, 2, 3, and so on). The data structure represented by the table 460 is assembled by the data provisioning component 400 shown in Fig. 1 for an individual recipient based on the content of the database 404.

In the exemplary table 460 of Fig. 4, each individual line includes data items that relate to an individual card payment transaction. Each card payment transaction is again associated with an account number, and one or more accounts numbers may be grouped (or clustered) within a recipient-specific customer reference identifier. The payment details associated with a particular customer reference identifier (i.e., with a particular recipient) are packaged into a single data structure visualized by the table 460. The table 460 illustrated in Fig. 4 exemplarily lists card payment transactions for the payment card with the account number (or payment card identifier) 1220 1234 5678 910 for a specific period of time.

The processor 402 of the data provisioning component 400 periodically assembles for each individual customer reference identifier a data structure as visualized in Fig. 4. The data structure thus generated is sent via the interface 406 to the EDI component 200, where it is received by the interface 210 and forwarded to the processor 206.

The processor 206 determines the customer reference identifier included in the data structure received via the interface 210. Using the customer reference identifier as a database key, the corresponding recipient-specific formatting rule is received from the database 208. This means that each recipient-specific formatting rule stored in the database 208 is associated with a database key in the form of a customer reference identifier, which again identifies a particular recipient 300.

The recipient-specific formatting rule retrieved from the database 208 is then applied to the newly received data structure, and the formatted data structure is forwarded (e.g. by e-mail or FTP) via the interface 204 and the network 250 to the recipient 300. In case no recipient-specific formatting rule can be found in the database 208, the processor 206 retrieves a standard formatting rule and applies this standard formatting rule to the data structure received from the data provisioning component 400 before forwarding the formatted data structure to the recipient 300.

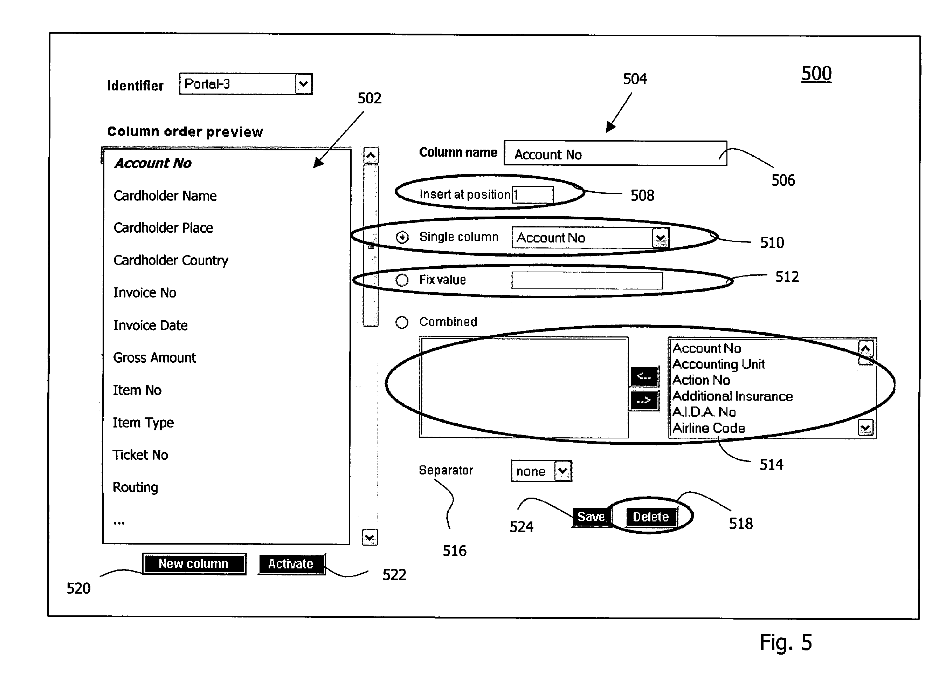

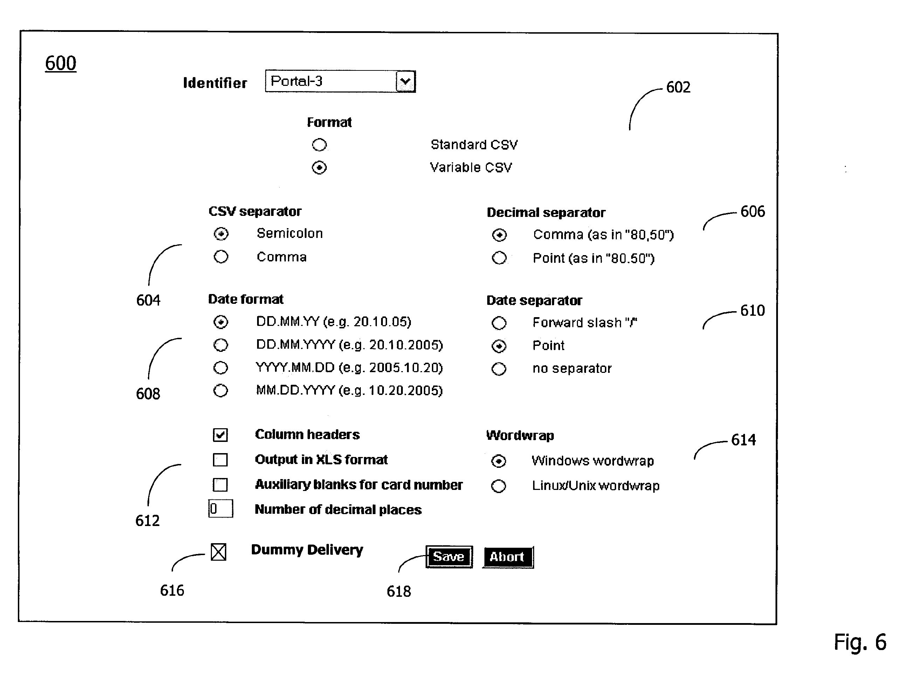

Before a user-specific formatting rule can be retrieved from the database 208 and applied to a data structure (such as the data structure visualized by the table 460 in Fig. 4), the user-specific formatting rule has to be generated and stored in the database 208. As mentioned above, each recipient-specific formatting rule is generated by the EDI component 200 based on adaptation instructions received from the recipient 300 or any other network component acting on behalf of the recipient 300. The adaptation instructions may be specified via a menu. The menu is generated on the side of the recipient 300 (or the component acting on behalf of the recipient 300) based on menu information received from the EDI component 200. The menu information may, for example, be transmitted by the EDI component 200 in the form of hypertext markup language (HTML) code or any other code that permits the generation of a graphical or non-graphical menu on the receiving side. Two examples of graphical menus enabling a specification of adaptation instructions on a receiving side of the menu information are shown in Figs. 5 and 6.

Fig. 5 illustrates a graphical menu 500 enabling a specification of adaptation instructions in the form of column-related operations.

The left-hand side of menu 500 includes a preview field 502 that illustrates the current column order. An individual column may be selected in the preview field 502 for column processing. Various column processing operations are offered on the right-hand side 504 of the menu 500 for a specific column selected in the column preview field 502. Originally, the column order displayed in the preview field 502 will correspond to the column order of the table 460 shown in Fig. 4.

An individual column selected in the preview field 502 may be processed on the right-hand side 504 of the menu as exemplarily shown for the column "Account No." in the field 506. A first menu option 508 permits the definition of the position of the selected column within the table. A second menu option 510 permits the specification that the selected column operations are to be applied only to a single column. A further menu option 512 permits the filling of the selected column with a fixed value or character string. Another menu option 514 allows to combine the content of two or more columns into the selected column. Further menu options 516, 518 permit the specification of a character separating the contents of column fields combined via menu option 514, and the deletion of the selected column, respectively. Finally, menu options 520 and 524 allow the definition of a new column and the saving of individual columns. By activating via button 522 the column-related operations specified in the menu 500, corresponding adaptation instructions are generated and stored on the remote side (EDI component 200 in Fig. 1) as a recipient-specific formatting rule.

Fig. 6 shows another graphical menu 600, which allows the specification of adaptation instructions relating to the separation of individual data items within the data structure and to other formatting options. More specifically, menu option 602 permits the activation of a recipient-specific formatting rule, menu option 604 permits the selection of a CSV separator, menu option 606 permits the selection of a decimal separator, menu option 608 permits the selection of a date format, and menu option 610 permits the selection of a date separator. Menu option 612 permits the activation of column headers (as shown in line 1 of the table illustrated in Fig. 4), the selection of an XLS output format, the selection of auxiliary blanks for the card number (account number) and the specification of the number of decimal places. A further menu option 614 is provided for a wordwrap selection. Another menu option 616 requests the generation and transmission of dummy data. Upon activation of button 618, the adaptation instructions specified via the menu 600 are saved.

The adaptation instructions input via the menus 500, 600 of Figs. 5, 6 may first be stored locally before being transmitted to the EDI component 200. Alternatively, the adaptation instructions could also be transmitted individually.

Upon receipt of the adaptation instructions by the EDI component 200, the adaptation instructions are identified by the processor 206 and stored as recipient-specific parameter settings replacing, completing or overwriting standard parameter settings of a standard formatting rule (and thus defining a recipient-specific formatting rule).

If the processor 206 of the EDI component 200 determines that a transmission of dummy data has been requested via menu option 616 in menu 600 of Fig. 6, the processor 206 retrieves a dummy data structure from the database 208 and applies the newly generated recipient-specific formatting rule to this dummy data structure. The formatted dummy data structure is then sent (e.g. by e-mail) via the interface 204 to the network component that has generated the adaptation instructions for an immediate check. Depending on the outcome of this check, the adaptation instructions may be iteratively modified until the desired formatting result is achieved. The dummy data structure may have an appearance similar to the table 460 shown in Fig. 4 with anonymized but meaningful content.

While the current invention has been described in relation to is preferred embodiments, it is to be understood that this disclosure is only illustrative. Accordingly, it is intended that the invention be limited only by the scope of the claims appended hereto.

## Claims

1. A method of customizing data transmissions to a plurality of recipients (300) in a computer network system (100), wherein a data structure having a plurality of data items is subjected to a formatting step before being transmitted via a computer network (250) to a recipient (300), and wherein the formatting step is based on a predefined formatting rule, the method comprising the steps of:
- receiving a request for an adaptation of a standard formatting rule for a specific recipient (300);
- transmitting menu information enabling a specification of adaptation instructions;
- receiving, in response to the transmitted menu information, one or more adaptation instructions pertaining to the recipient (300); and
- generating a recipient-specific formatting rule in accordance with the received adaptation instructions.

2. The method of claim 1, further comprising the steps of:
- providing a dummy data structure having a plurality of dummy data items;
- formatting the dummy data structure in accordance with the recipient-specific formatting rule to generate a formatted dummy data structure; and
- transmitting the formatted dummy data structure.

3. The method of claim 2, wherein the formatted dummy data structure is transmitted shortly after the generation of the recipient-specific formatting rule to enable an immediate check of the generated recipient-specific formatting rule.

4. The method of claim 3, wherein the formatted dummy data structure is transmitted in response to receipt of a transmission request.

5. The method of one of claims 1 to 4, wherein the data structure is representable in the form of a data table (460) having a plurality of columns.

6. The method of claim 5, wherein the adaptation instructions specify column-related operations, such as an addition or deletion of one or more columns, a change of column order, or a combination of the contents two or more columns into a single column.

7. The method of one of claims 1 to 6, wherein the adaptation instructions relate to a separation of the individual data items.

8. The method of one of claims 1 to 7, further comprising the steps of:
- receiving a data structure having a plurality of data items, the data structure being associated with a specific recipient (300);
- applying the recipient-specific formatting rule that has been generated for the recipient (300) to the data structure to generate a formatted data structure; and
- transmitting the formatted data structure via the computer network (250) to the recipient (300).

9. The method of claim 8, further comprising the steps of:
- providing a plurality of recipient-specific formatting rules, each recipient-specific formatting rule being associated with a unique identifier;
- determining an identifier associated with the received data structure; and
- identifying the specific recipient-specified formatting rule based on the identifier associated with the data structure.

10. The method of one of claims 1 to 9, further comprising the steps of:
- receiving a data structure having a plurality of data items, the data structure being associated with a specific recipient (300);
- determining if a recipient-specific formatting rule is available for the recipient (300);
- applying the standard formatting rule to the data structure if it is determined that no recipient-specific formatting rule is available; and
- transmitting the formatted data structure via the computer network (250) to the recipient (300).

11. The method of one of claims 1 to 10, wherein the steps of claims 8 to 10 are performed by an electronic data interchange component (200), and further comprising performing the following steps by a data provisioning component (400):
- identifying a plurality of data items associated with a specific recipient (300);
- generating a data structure including the plurality of identified data items; and
- transmitting the generated data structure to the electronic data interchange component (200).

12. The method of claim 11, wherein the data items have been generated in context with individual transactions.

13. The method of claim 12, wherein each individual transaction is associated with a recipient-specific identifier, and wherein the data items associated with a particular recipient-specific identifier are packaged into a single data structure.

14. The method of one of claims 1 to 13, wherein the standard formatting rule is based on a format selected from the group consisting of CSV, XLS, EDIFACT, XML, ATX, and a proprietary format, and/or wherein the data structure is provided by the provisioning component in a provisioning format that is selected from the group consisting of CSV, XLS, EDIFACT, XML, ATX, and a proprietary format.

15. The method of claim 14, wherein a format underlying the standard formatting rule is different from the provisioning format, and wherein the formatting rule includes transposing the provisioning format into one of the standard format and a recipient-specific format.

16. A method of customizing data transmissions to a plurality of recipients (300) in a computer network system (100), wherein a data structure having a plurality of data items is subjected to a formatting step before being transmitted via a computer network (250) to a recipient (300), and wherein the formatting step is based on a predefined formatting rule, the method comprising the steps of:
- generating and transmitting a request for an adaptation of a standard formatting rule for a specific recipient (300);
- receiving menu information enabling a specification of one or more adaptation instructions; and
- generating, in response to the received menu information, and transmitting adaptation instructions pertaining to the recipient (300), the adaptation instructions defining a recipient-specific formatting rule.

17. The method of claim 16, wherein the steps are performed via a Web portal.

18. A computer program product comprising program code portions for performing the steps of one of claims 1 to 17 when the computer program product is executed on one or more computing devices (200, 300).

19. The computer program product of claim 18, stored on a computer-readable recording medium.

20. A device (200) for customizing data transmissions to a plurality of recipients (300) in a computer network system (100), wherein a data structure having a plurality of data items is subjected to a formatting step before being transmitted via a computer network (250) to a recipient (300), and wherein the formatting step is based on a predefined formatting rule, the device (200) comprising:
- a first interface (202) adapted to receive a request for an adaptation of a standard formatting rule for a specific recipient (300);
- a second interface (204) adapted to transmit menu information enabling a specification of adaptation instructions;
- the first interface (202) additionally being adapted to receive, in response to the transmitted menu information, one or more adaptation instructions pertaining to the recipient (300); and
- a processor. (206) adapted to generate a recipient-specific formatting rule in accordance with the received adaptation instructions.

21. A device (300) for customizing data transmissions to a plurality of recipients (300) in a computer network system (100), wherein a data structure having a plurality of data items is subjected to a formatting step before being transmitted via a computer network (250) to a recipient (300), and wherein the formatting step is based on a predefined formatting rule, the device (300) comprising:
- a processor (302) adapted to generate a request for an adaptation of a standard formatting rule for a specific recipient (300);
- a first interface (304) adapted to transmit the generated request;
- a second interface (306) adapted to receive menu information enabling a specification of an adaptation instructions;
- the processor (302) further being adapted to generate, in response to the received menu information, one or more adaptation instructions pertaining to the recipient (300), the adaptation instructions defining a recipient-specific formatting rule; and
- the second interface (306) further being adapted to transmit the generated adaptation instructions.
